(19) Europäisches Patentamt

European Patent Office

Office européen des brevets

(11) **EP 1 006 692 A1**

(12) **EUROPÄISCHE PATENTANMELDUNG**

(43) Veröffentlichungstag:
07.06.2000 Patentblatt 2000/23

(51) Int. Cl.7: **H04L 12/56**

(21) Anmeldenummer: **98122719.2**

(22) Anmeldetag: **30.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT**
**80333 München (DE)**

(72) Erfinder:
- **Benz, Michael Dipl.-Ing.**
  **13629 Berlin (DE)**
- **Klein, Anja Dr.-Ing.**
  **10709 Berlin (DE)**
- **Sitte, Armin Dipl.-Ing.**
  **10405 Berlin (DE)**
- **Ulrich, Thomas Dipl.-Ing.**
  **67098 Bad Dürkheim (DE)**
- **Sommer, Volker Dr.-Ing.**
  **13503 Berlin (DE)**

(54) **Verfahren und Kommunikationssystem zur Übertragung einer Kombination mehrerer Dienste über gemeinsam genutzte physikalische Kanäle**

(57) Erfindungsgemäß wird zur Verringerung des In-Band-Signalisierungsaufwands ausgenutzt, daß unabhängig von einer momentanen Kombination der Transportformate verschiedener Dienst, die über gemeinsam genutzte physikalische Kanäle übertragen werden, eine Gesamtdatenrate für alle Dienste dem Empfänger bekannt ist. Diese Gesamtdatenrate ergibt sich aus einer vorangegangenen Ressourcenzuteilung (Anzahl Spreizkodes und/oder Zeitschlitze, Spreizfaktor, etc.), durch eine sogenannte „blinde Detektion" der Empfangsseite (Feststellung der Datenrate bzw. des Spreizfaktors) während der Detektion oder durch empfangsseitigem Erkennen der momentan genutzten Ressourcen innerhalb des Pools zugeteilter Ressourcen. Die bestimmte Gesamtdatenrate ist ein implizit vorhandene Information für die Kombination der Transportformate, da bei einer gegebenen Gesamtdatenrate nur bestimmte Kombinationen möglich sind. Eine Anwendung findet die Erfindung in UMTS-Mobilfunksystemen.

## Fig. 5

| TFCI | GR | TFC |
|--------|-----|------|
| 000000 | - | TFC0 |
| 000001 | GR1 | TFC1 |
| 000001 | GR2 | TFC2 |
| 000010 | - | TFC3 |
| 000011 | GR1 | TFC4 |
| 000011 | GR2 | TFC5 |
| 000100 | - | TFC6 |
| 000101 | GR1 | TFC0 |
| .. | .. | .. |

EP 1 006 692 A1

**Beschreibung**

Die Erfindung betrifft ein Verfahren und ein Kommunikationssystem zur Übertragung von Daten einer Kombination mehrerer Dienste über gemeinsam genutzte physikalische Kanäle, insbesondere in Mobilfunksystemen mit breitbandigen Funkkanälen.

Ein Kommunikationssystem stellt für eine Übertragung von Daten zwischen einer Datenquelle und einer Datensenke ein oder mehrere physikalische Übertragungskanäle bereit. Die Übertragungskanäle können unterschiedlichster Art sein, z.B. für eine leitungsgebundene Übertragung mit elektrischen oder optischen Signalen oder für eine Funkübertragung über eine Funkschnittstelle mit Hilfe elektromagnetischer Wellen. Im Folgenden wird insbesondere auf die Funkübertragung eingegangen, ohne die Allgemeinheit des Einsatzgebietes der Erfindung einzuschränken.

Die Funkübertragung wird in Mobilfunksystemen genutzt, um eine Verbindung zu nichtstationären Teilnehmerendgeräten herzustellen. Eine Mobilstation eines Mobilfunksystems ist ein solches nichtstationäres Teilnehmerendgerät. Die Mobilstation kann innerhalb der Netzabdeckung von beliebigen Standorten aus eine Verbindung anfordern bzw. es kann eine Verbindung zur Mobilstation aufgebaut werden. Das weitverbreitetste Mobilfunksystem ist GSM (global system for mobile communications), das für einen einzigen Dienst, zur Sprachübertragung entwickelt wurde. Das GSM-Mobilfunksystem wird als System der 2. Generation bezeichnet.

Für die darauffolgende, die 3. Mobilfunkgeneration, die z.Z. in Europa unter der Bezeichnung UMTS (universal system for mobile communications) standardisiert wird, ist im Gegensatz dazu eine Mehrzahl von Diensten vorgesehen, die innerhalb eines Übertragungsprotökolls über gemeinsam genutzte physikalische Kanäle übertragen werden sollen.

Die Standardisierungsdokumente ETSI SMG2/UMTS L23 expert group, Tdoc SMG2 UMTS-23 257/98, vom 6.10.1998, Tdoc SMG2 508/98 und Tdoc SMG2 515/98, vom 16.11.1998, geben einen Überblick über den heutigen Entwicklungsstand der Standardisierung und insbesondere über die Anforderungen dahingehend, wie ein Übertragungsprotokoll den Transport von Daten mehrerer Dienste unterstützen kann.

Die Nutzung eines gemeinsamen physikalischen Kanals für die Übertragung von Daten mehrerer Dienste setzt voraus, daß eine eindeutige Abbildungsvorschrift die Zuordnung der Dienste zu unterschiedlichen Segmenten des physikalischen Kanals angibt. Ein physikalischer Kanal wird beispielsweise durch ein Frequenzband, einen Spreizkode (CDMA code division multiple access) und ggf. einen Zeitschlitz innerhalb eines Rahmens definiert.

Zur Beschreibung der Abbildungsvorschrift werden folgende Begriffe verwendet:

Transport Format (TF):

Ein Transportformat definiert eine Datenrate, eine Kodierung, eine Verwürfelung (Interleaving), eine Datenratenanpassung durch Punktierung und eine Fehlerschutzvorschrift eines Transportkanals für einen Dienst.

Transport Format Set (TFS):

Hiermit wird ein Satz möglicher Transportformate bezeichnet, die für einen speziellen Dienst erlaubt sind.

Transport Format Combination (TFC):

Dieser Begriff gibt eine mögliche Kombination von Transportformaten der verschiedenen Dienste an, die auf einen gemeinsamen physikalischen Kanal abgebildet werden.

Transport Format Combination Set (TFCS):

Hiermit wird ein Satz möglicher TFC als Teilmenge aller TFC bezeichnet, die für eine spezielle Verbindung erlaubt sind.

Transport Format Combination Identifier (TFCI):

Diese Information gibt die aktuell verwendete Kombination von Transportformaten innerhalb des TFCS an.

Beispiele zu den Transportformaten können ETSI SMG2/UMTS L23 expert group, Tdoc SMG2 UMTS-23 257/98, vom 6.10.98, S.14-16, entnommen werden.

Für eine bedarfsgerechte Wahl der aktuell verwendeten Kombination von Transportformaten der verschiedenen Dienste ist eine Änderbarkeit des TFC und damit eine regelmäßig Signalisierung des TFCI notwendig. Diese Signalisierung bindet jedoch Übertragungskapazität. Je größer die Anzahl möglicher Kombinationsmöglichkeiten (TFCS), umso mehr Kapazität wird zur Signalisierung benötigt.

Der Erfindung liegt die Aufgabe zugrunde, ein Verfahren und ein Kommunikationssystem anzugeben, die die benötigte Signalisierungskapazität reduzieren ohne die Anzahl der Kombinationsmöglichkeiten und deren Auswahl einzuschränken. Diese Aufgabe wird durch das Verfahren nach den Merkmalen des Anspruchs 1 und das Kommunikationssystem mit den Merkmalen des Anspruch 10 gelöst. Vorteilhafte Weiterbildungen sind den Unteransprüchen zu entnehmen.

Erfindungsgemäß wird die Tatsache ausgenutzt, daß unabhängig von der Kombination der Transportformate eine Gesamtdatenrate für alle Dienste dem Empfänger bekannt ist. Diese Gesamtdatenrate ergibt sich aus einer vorangegangenen Ressourcenzuteilung (Anzahl Spreizkodes und/oder Zeitschlitze, Spreizfaktor, etc.), durch eine sogenannte „blinde Detektion" der Empfangsseite (Feststellung der Datenrate bzw. des Spreizfaktors) während der Detektion oder durch empfangsseitiges Erkennen der momentan genutzten Ressourcen innerhalb des Pools zugeteilter Ressourcen (z.B. beim DTX discontinuous transmission). Die bestimmte Gesamtdatenrate ist eine implizit vorhandene Information für die Kombination der Transportformate, da bei einer gegebenen Gesamtdatenrate nur bestimmte Kombinationen möglich sind. Dieser Ausschluß von Kombinationsmöglichkeiten für eine gegebene Gesamtdatenrate wird zur Verringerung des Signalisierungsbedarfs ausgenutzt.

Es wird damit sendeseirig nur eine Teilinformation bezüglich der Kombination der aktuell benutzten Transportformate erzeugt und zur Empfangsseite signalisiert, die eine binäre Kodierung mit einer Stellenzahl verwendet, die im Vergleich zur Gesamtheit der erlaubten Kombinationen reduziert ist. Würden normalerweise mit n Bits nur $2^n$ Kombinationsmöglichkeiten signalisierbar sein, so kann diese Zahl entsprechend der Erfindung beträchtlich erhöht werden bzw. die benötigten Bits zur Signalisierung reduziert werden. Damit sinkt die zur Signalisierung benötigte Übertragungskapazität. Diese eingesparte Übertragungskapazität kann zur Nutzdatenübertragung und damit zur Steigerung der Leistungsfähigkeit des Kommunikationssystems eingesetzt werden.

Die Gesamtdatenrate, die bei der Bestimmung der Kombination der Transportformate berücksichtigt wird, gibt eine Bit- oder Symbolrate vor oder nach einer Kanalkodierung an. Die Gesamtdatenrate bezeichnet die Summe aller Datenraten der physikalischen Kanäle, auf die sich die Teilinformation bezieht. Die Symbolrate nach der Kanalkodierung gibt die Rate auf dem physikalischen Kanal bzw. den physikalischen Kanälen (z.B. der Funkschnittstelle) an. Alternativ kann die Gesamtdatentrate auch die Nutzbitrate bedeuten. Es muß also vorab sende- und empfangsseitig eine gemeinsame Referenzgröße für die Gesamtdatenrate definiert werden. Die Symbolrate wird durch den Spreizfaktor bestimmt.

Nach einer vorteilhaften Weiterbildung der Erfindung erfolgt die Datenübertragung über eine Funkschnittstelle eines Funk-Kommunikationssystems. Bei Funk-Kommunikationssystemen, z.B. UMTS, sind die Übertragungsressourcen besonders knapp. Die Anzahl verfügbarer Frequenzbänder ist begrenzt und jeder Betreiber kann davon nur einen gewissen Teil nutzen. Trotzdem sollen für manche Dienste hohe Datenraten (bis 2 Mbit/s) angeboten werden. Die Erfindung bringt bei einem solchen Funk-Kommunikationssystem besondere Vorteile.

Eine besonders flexible Zuteilungsstrategie von Übertragungskapazitäten zu Verbindungen wird ermöglicht, wenn eine Funkschnittstelle durch einen breitbandigen Frequenzkanal (z.B. 5 MHz) gebildet wird, wobei Signale in mehreren durch Spreizkodes bzw. zusätzlich durch Zeitschlitze separierbare physikalischen Kanälen gleichzeitig übertragen werden. Durch eine Veränderung des Spreizkodes oder durch Zuteilung zusätzlicher Spreizkodes können die Übertragungskapazitäten schnell dem Bedarf angepaßt werden. Die Erfindung eignet sich sowohl für den Einsatz im FDD (frequency division multiplex) als auch im TDD (time division multiplex) Modus eines Funk-Kommunikationssystems.

Für eine besonders schnelle Signalisierung wird die Teilinformation in jedem Rahmen der Datenübertragung des gemeinsamen physikalischen Kanals übertragen. Damit ergibt sich auch eine sehr schnelle Änderung der gewählten Kombination-. Die gemeinsame Übertragung von Daten mehrerer Dienste kann auf einen oder auf mehrere Kanäle bezogen sein. Bei mehreren gemeinsam genutzten Kanälen werden die Daten mehrerer Dienste auf einen kodierten gemeinsamen Transportkanal abgebildet und die Daten des kodierten gemeinsamen Transportkanals wiederum gleichmäßig auf mehrere physikalische Kanäle aufgeteilt.

Ausführungsbeispiele der Erfindung werden anhand der beiliegenden Zeichnungen näher erläutert.
Dabei zeigen

Fig 1    eine schematische Darstellung eines Funk-Kommunikationssystems,
Fig 2    ein Schichtenmodell der Übertragungsprotokolle,
Fig 3, 4    Abbildungen von Daten verschiedener Dienste auf gemeinsame physikalische Kanäle,
Fig 5, 6    Tabellen mit einer Abbildungsvorschrift unter Berücksichtigung der Gesamtdatenrate, und
Fig 7    eine rahmenweise Datenübertragung mit In-Band-Signalisierung.

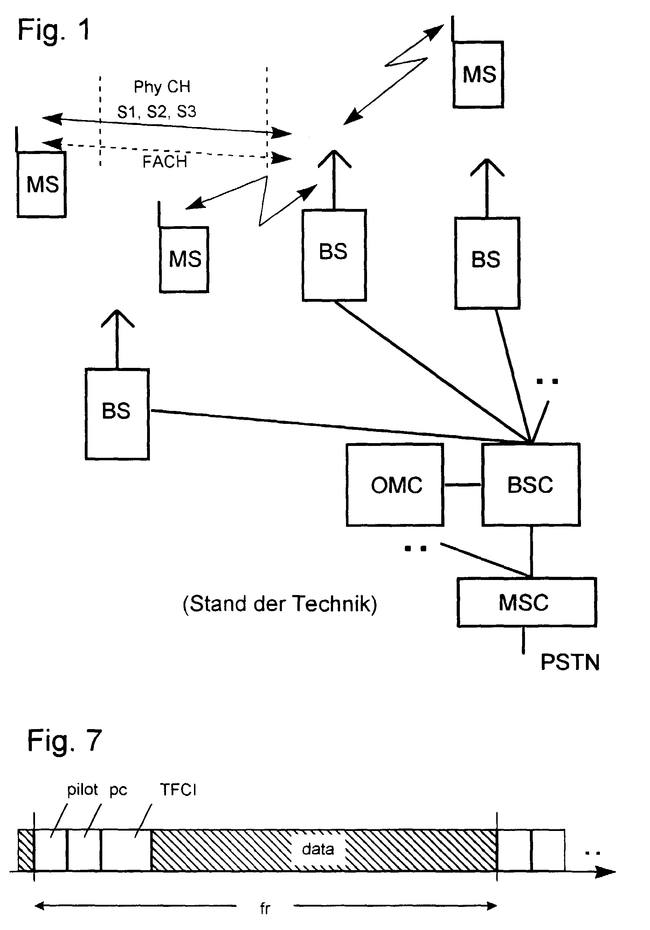

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zur Steuerung der Übertragungsressourcen verbunden. Jede dieser Einrichtungen RNM ermöglicht wiederum eine Verbindung zu zumindest einer Basisstation BS.
Eine Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 sind Verbindungen zur Übertragung von Nutzinformationen zwischen einer Basisstation BS und Mobilstationen MS dargestellt. Innerhalb von einer Verbindung V1 werden Daten von beispielsweise drei Diensten S (S1, S2, S3) innerhalb eines oder mehrerer physikalischer Kanäle Phy CH und Signalisierungsinformationen, z.B. die zugeteilten funktechnischen Ressourcen für eine Verbindung V1, über einen verbindungsbegleitenden Kontrollkanal FACH (Forward link Access CHannel) übertragen.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Im Funk-Kommunikationssystem nach Fig 1 sind sowohl in den Basisstationen BS als auch den Mobilstationen MS Datenübertragungsmittel, Empfangsmitteln und Signalisierungsmittel vorgesehen, die miteinander kommunizieren. Die Datenübertragungsmittel dienen der Übertragung von Daten einer Kombination mehrerer Dienste S über die aktuell verfügbaren gemeinsamen physikalischen Kanäle Phy CH. Die Signalisierungsmittel bestimmen Teilinformationen TFCI zu den ausgewählten Kombinationen von Transportformaten für Dienste S1, S2, S3 und führen eine In-band-Signalisierung der Transportformate TF durch.

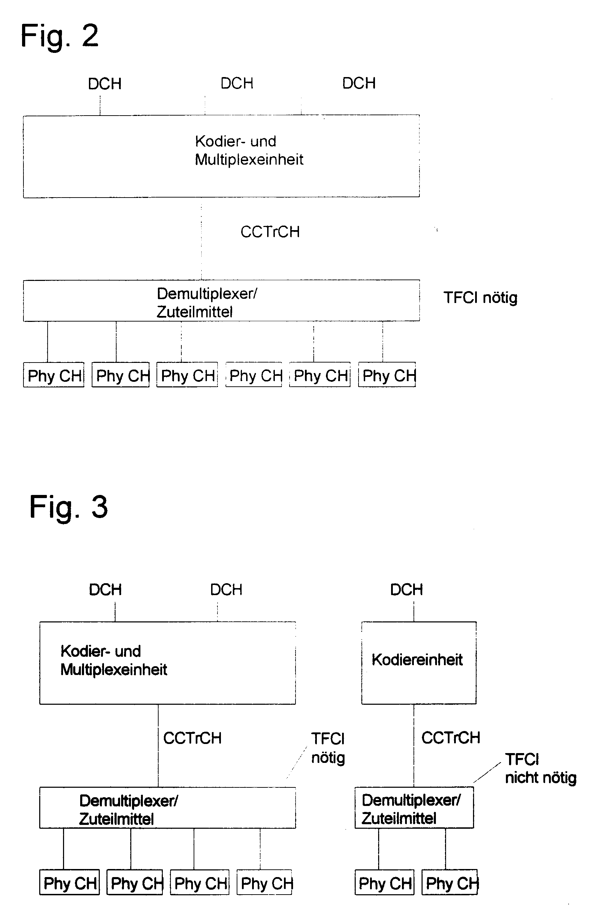

Das Schichtenmodell nach Fig 2 zeigt eine Einteilung der Protokolle des Funkkommunikationssystems in drei Schichten. <u>Schicht 1</u>: physikalische Schicht zur Beschreibung aller Funktionen zur Bitübertragung über ein physikalisches Medium (z.B. Kodierung, Modulation, Sendeleistungskontrolle, Synchronisation etc.),

<u>Schicht 2</u>: Schicht der Datenverbindung zur Beschreibung der Abbildung von Daten auf die physikalische Schicht und deren Kontrolle,

<u>Schicht 3</u>: Netzwerk-Schicht zur Steuerung der Ressourcen der Funkschnittstelle.

Weitere Einzelheiten sind auch ETSI SMG2/UMTS L23 expert group, Tdoc SMG2 508/98, vom 16.11.1998, S.9-25 (figure 11), entnehmbar. In der Schicht 3 wird für eine Verbindung das TFCS festgelegt, währenddessen in der Schicht 2 die Auswahl einer Kombination (eines TFC) erfolgt, die wie später gezeigt mittels eines TFCI In-Band signalisiert wird.

Der Parameteraustausch zwischen den Schichten 1 und 2 unterstützt die Funktionen eines Transfers von Rahmen mit Daten der Schicht 2 über die Funkschnittstelle und der Anzeige des Status der Schicht 1 an höhere Schichten. Der Parameteraustausch zwischen den Schichten 1 und 3 unterstützt die Kontrolle der Konfiguration der Übertragung in der Schicht 1 und generiert Systeminformation über die Schicht 1.

Die Abbildung der Daten verschiedener Verbindungen S auf einen gemeinsamen physikalischen Kanal Phy CH entspricht dabei der Interaktion der Schichten 1 und 2.

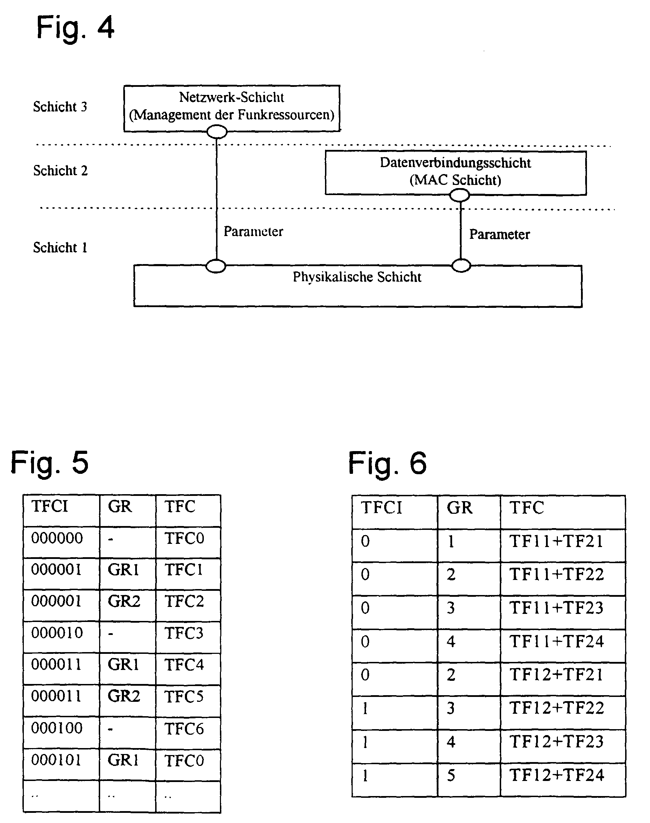

Entsprechend der Figuren 3 und 4 ergibt sich die Notwendigkeit einer Signalisierung von Transportformaten TF für aktuell übertragene Dienste.

In Fig 3 ist als funktionelle Darstellung eine Kodier- und Multiplexeinheit gezeigt, die Daten mehrerer Datenkanäle DCH, diese entsprechen jeweils den Daten eines Dienstes S1, S2, S3, auf einen kodierten gemeinsamen Transportkanal CCTrCH abbildet. Eine Abbildung ist dabei eine Vorschrift, nach welchem Bitmuster die Daten in eine serielle Datensequenz eingetragen werden. Ein Demultiplexer/Zuteilmittel verteilt die Daten des kodierten gemeinsamen Transportkanals CCTrCH auf mehrere physikalische Kanäle Phy CH. Über die physikalischen Kanäle Phy CH werden somit jeweils ständig Daten mehrerer Dienste S1, S2, S3 übertragen. Kein physikalischer Kanal Phy CH ist einem Dienst S1 oder S2 oder S3 allein sondern dem kodierten gemeinsamen Transportkanal CCTrCH mit allen seinen Diensten S1, S2, S3 zugeordnet.

Da die Empfangsseite diese Abbildung nachvollziehen und die Daten aus den physikalischen Kanälen Phy CH auslesen und wieder in getrennten Transportkanälen DCH der Dienste darstellen muß, ist eine Signalisierung vonnöten. Diese Signalisierung in Form einer Teilinformation TFCI gibt die aktuell benutzte Kombination der Transportformate TF der Dienste wieder. Welche Kombinationen für die Verbindung zugelassen sind (TFCS) wurde zum Verbindungsaufbau vereinbart.

Fig 4 zeigt die Abbildung in leicht abgewandelter Form, wobei klarer wird, daß nur bei einer gemeinsamen Nutzung von physikalischen Kanälen Phy CH durch mehrere Dienste S1, S2, S3 die Signalisierung der Teilinformation TFCI nötig ist. Nutzt ein Dienst S1 oder S2 oder S3 einen physikalischen Kanal Phy CH ausschließlich, so kann auf die Signalisierung der Teilinformation TFCI verzichtet werden.

Die Dienste S können unterschiedlichster Art sein. So sind S1, S2 beispielsweise Dienste mit hohen Datenratendynamik, z.B. S1 eine Videoübertragung und S2 eine Internet-Anbindung, und S3 ein Dienst mit geringer Datenratendynamik, z.B. eine Sprachübertragung.

Die ausgewählten Kombinationen TFC der Transportformate TF sind nach einem ersten Ausführungsbeispiel entsprechen Fig 5 festgelegt, wobei zwei unterschiedliche Gesamtdatenraten GR1, GR2 möglich sind. Für eine binär kodierte Teilinformation TFCI von „0000" spielt die Gesamtdatenrate GR keine Rolle. Die mit „0000" kodierte Kombination TFC ist immer TFC0. Bei der Teilinformation „0001" wird anhand der Gesamtdatenrate GR1 oder GR2 in zwei unterschiedliche Kombinationen TFC1 oder TFC2 unterschieden. Damit ist die Anzahl von mit 4 Bits kodierbarer Kombinationen TFC größer als $2^4$. Oder anders betrachtet, kann eine gegebene Anzahl von Kombinationen TFC mit weniger Bit kodiert werden. Es liegt jedoch ebenso im Rahmen der Erfindung, daß andere als binäre Kodierungen verwendet werden.

In einer vollständig kodierten Kombination ist die Information über die Gesamtdatenrate GR enthalten. Diese Information ist jedoch redundant und wird entsprechend der Erfindung durch eine Teilinformation TFCI ersetzt.

Eine zweites Ausführungsbeispiel nach Fig 6 geht von insgesamt fünf unterschiedlichen Gesamtdatenraten GR aus, wobei zur Vereinfachung die Stufen zwischen den Gesamtdatenraten GR1 bis GR5 identisch zu den Stufen der Datenraten der Transportformate TF sind. Zwei Dienste S1, S2 werden unterstützt, die jeweils vier unterschiedliche Transportformate TF11 bis TF14 und TF21 bis TF24 benutzen können. Die Abbildungsvorschrift kommt mit nur einem Bit als Teilinformation TFCI für acht mögliche Kombinationen aus. Das Symbol „-„ bedeutet, daß dieser Wert beliebig sein kann.

Ein weiteres Ausführungsbeispiel sei kurz erwähnt: Besteht das TFCS aus K verschiedenen Diensten $S_i$ mit i=1..K für welche jeweils $L_i$ erlaubte Transportformate TF definiert sind.

$$TFC = (TF_{i1}, TF_{i2}, ..TF_{iLi})$$

Die Teilinformation TFCI gibt im Sinne der Erfindung nur die Kombinationsmöglichkeiten der Dienste 1 bis K-1 an, während das Transportformat TF des Dienstes K über die Gesamtdatenrate GR abzüglich der Datenraten der übrigen Dienste 1..K-1 bestimmbar ist. Vorteilhafterweise ist der Dienst K derjenige mit der höchsten Anzahl unterschiedlicher Transportformate. Dadurch ergibt sich die größte Reduktion der benötigten binären Symbole für die Kodierung.

Die Gesamtdatenrate GR wird in einem schnellen verbindungsbegleitenden Kontrollkanal FACH als Ressourcenzuteilung (Spreizkode, Spreizfaktor, Zeitschlitz) übertragen oder wird gemäß einer blinden Dezektion durch die Empfangsseite aus den Signalen selbst gewonnen.

Die In-Band-Signalisierung der Teilinformation TFCI erfolgt gemäß Fig 7. Innerhalb einer rahmenweisen Übertragung von Daten (data) zusammen mit weiteren Informationen ist auch Kapazität zur Übertragung der aktuell gewählten Kombination der Transportformate in Form der Teilinformation TFCI vorgesehen. Im FDD Modus hat ein Rahmen eine Dauer von 10 ms, wobei Bits einer Pilotsequenz (pilot) der Kanalschätzung dienen, Bits (pc) zur Sendeleistungsregelung benötigt werden und Bits zur In-Band-Signalisierung des TFCI reserviert sind. Es folgt ein Datenanteil data mit Nutzinformationen. Eine Fehlerschutzkodierung des TFCI auf z.B. 32 Bit und eine Verwürfelung der Nutzinformationen über mehrere Rahmen sind in Fig 7 nicht gezeigt.

Die Beschreibung der gewählten Transportformate gilt für eine Übertragungsrichtung. In eine Verbindung können natürlich in beiden Übertragungsrichrungen (UL Aufwärtsrichtung von der Mobilstation MS zur Basisstation BS und DL Abwärtsrichtung von der Basisstation BS zur Mobilstation MS) Daten übertragen werden, wobei für die Datenraten durchaus asymmetrisch und entsprechend unterschiedliche Transportformate TF festgelegt sein können.

## Patentansprüche

1. Verfahren zur Übertragung von Daten einer Kombination mehrerer Dienste (S) über gemeinsam genutzte physikalische Kanäle (Phy CH), bei dem

   - für die Dienste (S) jeweils eine Menge erlaubter Transportformate (TF) festgelegt werden,
   - eine Kombination der aktuell benutzten Transportformate (TF) der Dienste (S) festgelegt wird,
   - eine Teilinformation TFCI) bezüglich der Kombination der aktuell benutzten Transportformate (TF) signalisiert wird, wobei die Teilinformation (TFCI) eine binäre Kodierung mit einer Stellenzahl verwendet, die im Vergleich zur Gesamtheit der erlaubten Kombinationen reduziert ist,
   - die Daten der Dienste (S) entsprechend der Kombination über einen gemeinsam genutzten physikalischen Kanal (PhyCH) übertragen werden,
     empfangsseitig
   - eine Gesamtdatenrate (GR) der Kombination der Dienste bestimmt wird,
   - aus der Gesamtdatenrate (GR) und der Teilinformation (TFCI) die Kombination der aktuell benutzten Transportformate (TF) ermittelt wird, und
   - die Daten entsprechend der ermittelten Kombination ausgewertet werden.

2. Verfahren nach Anspruch 1, bei dem die Gesamtdatenrate (GR) getrennt signalisiert wird.

3. Verfahren nach Anspruch 1, bei dem die Gesamtdatenrate (GR) aus einer Ressourcenzuteilung für die Datenübertragung abgeleitet wird.

4. Verfahren nach Anspruch 1, bei dem die Gesamtdatenrate (GR) aus der Ressourcennutzung zugeteilter Ressourcen abgeleitet wird.

5. Verfahren nach einem der vorherigen Anspruch, bei dem die Gesamtdatenrate (GR) eine Bit- oder Symbolrate vor oder nach einer Kanalkodierung angibt.

6. Verfahren nach einem der vorherigen Ansprüche, bei dem

die Teilinformation (TFCI) in jedem Rahmen (fr) der Datenübertragung des gemeinsamen physikalischen Kanals oder der physikalischen Kanäle Phy CH) übertragen wird.

7. Verfahren nach einem der vorherigen Ansprüche, bei dem

die Daten mehrerer Dienste (S) auf einen kodierten gemeinsamen Transportkanal (CCTrCH) abgebildet und die Daten des kodierten gemeinsamen Transportkanals (CCTrCH) wiederum gleichmäßig auf mehrere physikalische Kanäle (Phy CH) aufgeteilt werden.

8. Verfahren nach einem der vorherigen Ansprüche, bei dem

die Datenübertragung über eine Funkschnittstelle eines Funk-Kommikationssystems erfolgt.

9. Verfahren nach Anspruch 8, bei dem

die Funkschnittstelle durch einen breitbandigen Frequenzkanal gebildet wird, wobei Signale in mehreren durch Spreizkodes und ggf. zusätzliche durch Zeitschlitze separierbaren Kanälen (Phy CH) gleichzeitig übertragen werden.

10. Kommunikationssystem

mit Datenübertragungsmitteln zur Übertragung von Daten einer Kombination mehrerer Dienste (S) über gemeinsam genutzte physikalische Kanäle, wobei für die Dienste (S) jeweils eine Menge erlaubter Transportformate (TF) und eine Kombination der aktuell benutzten Transportformate (TF) der Dienste (S) festgelegt wird,

mit Signalisierungsmitteln, die eine Teilinformation (TFCI) bezüglich der Kombination der aktuell benutzten Transportformate (TF) signalisieren, wobei die Teilinformation (TFCI) eine binäre Kodierung mit einer Stellenzahl verwendet, die im Vergleich zur Gesamtheit der erlaubten Kombinationen reduziert ist,

mit Empfangsmitteln

- zur Bestimmung einen Gesamtdatenrate (GR) der Kombination der Dienste, und
- zur Bestimmung der aktuell benutzten Transportformate (TF) aus der Gesamtdatenrate (GR) und der Teilinformation (TFCI) die Kombination, so daß die Daten entsprechend der ermittelten Kombination ausgewertet werden.

## Fig. 1

Phy CH
S1, S2, S3

MS

FACH

MS

MS

MS

BS

BS

BS

OMC

BSC

(Stand der Technik)

MSC

PSTN

## Fig. 7

pilot  pc    TFCI

data

fr

# Fig. 2

DCH          DCH          DCH

Kodier- und
Multiplexeinheit

CCTrCH

Demultiplexer/
Zuteilmittel                                    TFCI nötig

Phy CH | Phy CH | Phy CH | Phy CH | Phy CH | Phy CH

# Fig. 3

DCH          DCH                    DCH

Kodier- und
Multiplexeinheit                    Kodiereinheit

CCTrCH            TFCI          CCTrCH
                 nötig
                                              TFCI
                                              nicht nötig

Demultiplexer/                   Demultiplexer/
Zuteilmittel                     Zuteilmittel

Phy CH | Phy CH | Phy CH | Phy CH      Phy CH | Phy CH

# Fig. 4

Schicht 3 — Netzwerk-Schicht
(Management der Funkressourcen)

Schicht 2 — Datenverbindungsschicht
(MAC Schicht)

Schicht 1

Parameter          Parameter

Physikalische Schicht

# Fig. 5

| TFCI | GR | TFC |
|---|---|---|
| 000000 | - | TFC0 |
| 000001 | GR1 | TFC1 |
| 000001 | GR2 | TFC2 |
| 000010 | - | TFC3 |
| 000011 | GR1 | TFC4 |
| 000011 | GR2 | TFC5 |
| 000100 | - | TFC6 |
| 000101 | GR1 | TFC0 |
| .. | .. | .. |

# Fig. 6

| TFCI | GR | TFC |
|---|---|---|
| 0 | 1 | TF11+TF21 |
| 0 | 2 | TF11+TF22 |
| 0 | 3 | TF11+TF23 |
| 0 | 4 | TF11+TF24 |
| 0 | 2 | TF12+TF21 |
| 1 | 3 | TF12+TF22 |
| 1 | 4 | TF12+TF23 |
| 1 | 5 | TF12+TF24 |

9

Europäisches Patentamt

EUROPÄISCHER RECHERCHENBERICHT

Nummer der Anmeldung

EP 98 12 2719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | NIKULA E ET AL: "FRAMES MULTIPLE ACCESS FOR UMTS AND IMT-2000" IEEE PERSONAL COMMUNICATIONS, Bd. 5, Nr. 2, 1. April 1998, Seiten 16-24, XP000751831 * Seite 16, linke Spalte, Absatz 1 - rechte Spalte, Absatz 2 * * Seite 20, rechte Spalte, Absatz 2 - Absatz 3 * * Seite 21, linke Spalte, Absatz 4 - rechte Spalte, Absatz 4 * * Seite 22, rechte Spalte, Absatz 3 - Absatz 4 * | 1,6-10 | H04L12/56 |
| A | BAIER A ET AL: "MULTI-RATE DS-CDMA RADIO INTERFACE FOR THIRD-GENERATION CELLULAR SYSTEMS" PROCEEDINGS OF EUROPEAN PERSONAL AND MOBILE COMMUNICATIONS CONFERENCE, 13. Dezember 1993, Seiten 255-260, XP000676187 * Seite 256, linke Spalte, Absatz 1 - Absatz 3 * | 1,8,10 | |
| A | WO 98 23104 A (OETTL MARTIN ;SIEMENS AG (DE); MENZEL CHRISTIAN (DE)) 28. Mai 1998 * Seite 3, Zeile 34 - Seite 4, Zeile 20 * | 1,8,10 | RECHERCHIERTE SACHGEBIETE (Int.Cl.6) H04L H04Q |
| A | US 5 703 872 A (HOANG QUY N ET AL) 30. Dezember 1997 * Spalte 3, Zeile 14 - Zeile 27 * * Spalte 4, Zeile 62 - Spalte 5, Zeile 6 * * Spalte 5, Zeile 16 - Zeile 36 * | 2-5 | |

Der vorliegende Recherchenbericht wurde für alle Patentansprüche erstellt

| Recherchenort | Abschlußdatum der Recherche | Prüfer |
|---|---|---|
| DEN HAAG | 4. Mai 1999 | Brichau, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EP 1 006 692 A1

**ANHANG ZUM EUROPÄISCHEN RECHERCHENBERICHT**
**ÜBER DIE EUROPÄISCHE PATENTANMELDUNG NR.**

EP 98 12 2719

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-1999

| Im Recherchenbericht angeführtes Patentdokument | Datum der Veröffentlichung | Mitglied(er) der Patentfamilie | | Datum der Veröffentlichung |
|---|---|---|---|---|
| WO 9823104 A | 28-05-1998 | DE | 19647629 A | 28-05-1998 |
| | | AU | 7305098 A | 10-06-1998 |
| | | AU | 7305198 A | 10-06-1998 |
| | | AU | 7305298 A | 10-06-1998 |
| | | AU | 7305398 A | 10-06-1998 |
| | | WO | 9823105 A | 28-05-1998 |
| | | WO | 9823106 A | 28-05-1998 |
| | | WO | 9823107 A | 28-05-1998 |
| US 5703872 A | 30-12-1997 | US | 5530696 A | 25-06-1996 |
| | | FR | 2721782 A | 29-12-1995 |
| | | JP | 8018574 A | 19-01-1996 |

EPO FORM P0461

Für nähere Einzelheiten zu diesem Anhang : siehe Amtsblatt des Europäischen Patentamts, Nr.12/82